# EUROPÄISCHE PATENTSCHRIFT

(11) **EP 3 575 866 B1**
(45) Veröffentlichungstag und Bekanntmachung des Hinweises auf die Patenterteilung: **28.10.2020**
(21) Anmeldenummer: 19176958.7
(22) Anmeldetag: 28.05.2019
(51) Int. Cl.: G03B 17/55, G03B 17/02, B08B 3/04, G02B 27/00, B60R 1/062, G08B 13/196, F23M 11/04

(54) **MOBILE ÜBERWACHUNGSEINRICHTUNG ZUR VERWENDUNG BEI EINER HÜTTENTECHNISCHEN ANLAGE, UND STEUERUNGSANLAGE ZUM BETRIEB EINER HÜTTENTECHNISCHEN ANLAGE**
MOBILE OBSERVATION DEVICE FOR USE IN A FURNACE AND CONTROL DEVICE TO OPERATE A FURNACE
DISPOSITIF D'OBSERVATION MOBILE DESTINÉ À ÊTRE UTILISÉ DANS UNE FOURNAISE ET DISPOSITIF DE COMMANDE POUR OPERER UNE FOURNAISE

(30) Priorität: 30.05.2018 DE 102018208557; 29.08.2018 DE 202018004004 U
(43) Veröffentlichungstag der Anmeldung: 04.12.2019
(73) Patentinhaber: SMS Group GmbH, 40237 Düsseldorf (DE)
(72) Erfinder: Weyer, Axel, 42349 Wuppertal (DE); Klein, Martin, 45277 Essen (DE)
(74) Vertreter: Klüppel, Walter

(56) Entgegenhaltungen:
- CN-B- 102 175 039
- JP-A- H0 972 852
- KR-A- 20140 018 505

## Beschreibung

Die Erfindung betrifft eine mobile Überwachungseinrichtung zur Verwendung bei einer hüttentechnischen Anlage, und eine Steuerungsanlage zum Betrieb einer hüttentechnischen Anlage.

Nach dem Stand der Technik sind für einen Betrieb von hüttentechnischen Anlagen Video- und Industriekameras bekannt, die in solchen Anlagen eine ortsfeste Installationsposition besitzen. Diese Kameras befinden sich dabei in der Regel an nicht einsehbaren oder gefahrenträchtigen Positionen einer hüttentechnischen Anlage, wobei von diesen Kameras ein aufgezeichnetes Bild zur Visualisierung an den Leitstand der Anlage übermittelt wird. Gleiches gilt für den Installationsort von Messgeräten zur Messung und Überprüfung von Gaskonzentrationen, die für Mensch oder Maschine gefährdend sind.

In Bezug auf den vorstehend genannten Stand der Technik besteht ein Nachteil dahingehend, dass die besagten Kameras ortsfest installiert sind, denn: In Folge dieser ortsfesten Installation sind nur begrenzte Bilddarstellungen bzw.
- ausschnitte von dem überwachten Anlagenbereich bzw. dem zugehörigen Betriebsprozess möglich. Selbst ein Schwenken und/oder Zoomen der Kameraobjektive, was durch eine Fernsteuerung z.B. von dem Leitstand aus eingestellt werden kann, gewährleistet keinen ausreichenden oder vollständigen Einblick in alle erforderlichen Bereiche einer zu überwachenden hüttentechnischen Anlage. Dies gilt insbesondere für den Fall, dass Anlagenstörungen auftreten oder
- betriebsbedingt - ungünstige Sichtverhältnisse herrschen, beispielsweise bei Rauch-, Dampf-, Nebel- oder Feuerentwicklung.

Ein weiterer Nachteil bei den vorstehend genannten fest installierten Kameras besteht darin, dass Wartungs- und Reparaturarbeiten nur bei einem Stillstand der Anlage bzw. bei nicht laufendem Prozess möglich sind. Anders ausgedrückt, können verschmutzte Objektive der fest installierten Überwachungskameras nicht im laufenden Produktionsbetrieb gereinigt werden.

Schließlich darf im Hinblick auf eine Messung von gefährdenden Gasen beim Betrieb von hüttentechnischen Anlagen auf den Nachteil hingewiesen werden, dass die hierzu erforderliche Anzahl von Messgeräten groß ist, um die betroffenen Bereiche einer solchen Anlage sicher überwachen zu können. Eine solch große Anzahl von Messgeräten ist kostspielig und wirkt sich negativ auf das Kosten-/Nutzenverhältnis aus.

Aus KR 2014 0018505 A ist ein mobiler Roboter mit einem mehrteiligen gelenkigen Auslegerarm bekannt. An einem freien Ende dieses Auslegerarms ist ein Paar Schaufeln angebracht, mit denen Reinigungsarbeiten für ein Abstichloch durchgeführt werden können. Die Ansteuerung dieser Schaufeln erfolgt mit Hilfe einer Kameraeinheit, die auf einem horizontalen Abschnitt eines Armsegments des Auslegerarms angebracht ist. Mittels eines Infrarot-Sensors, der ebenfalls auf dem horizontalen Abschnitt eines Armsegments des Auslegerarms und separat von der Kameraeinheit angebracht ist, kann die Temperatur im Bereich vor dem Auslegerarm des mobilen Roboters erfasst werden.

Der Erfindung liegt die Aufgabe zugrunde, den Betrieb einer hüttentechnischen Anlage mit preiswerten Mitteln zu optimieren und insbesondere die Betriebssicherheit von solchen Anlagen zu erhöhen.

Diese Aufgabe wird durch eine mobile Überwachungseinrichtung mit den Merkmalen von Anspruch 1 und durch eine Steuerungsanlage mit den Merkmalen von Anspruch 20 gelöst. Vorteilhafte Weiterbildungen der Erfindung sind in den abhängigen Ansprüchen definiert.

Eine mobile Überwachungseinrichtung gemäß der vorliegenden Erfindung ist zur Verwendung bei einer hüttentechnischen Anlage vorgesehen, wobei diese Überwachungseinrichtung im Bereich in der hüttentechnischen Anlage auf einer im Wesentlichen ebenen Fläche frei verfahren werden kann. Die Überwachungseinrichtung umfasst einen Untersatz mit Rädern oder Fahrketten, die auf der ebenen Fläche abrollen, einen Motor zum Antrieb der Räder oder Fahrketten, zumindest eine erste Kamera, mit der ein Bereich der hüttentechnischen Anlage beobachtbar und damit überwachbar ist, zumindest eine zweite Kamera, mit der ein Umgebungsbereich der mobilen Überwachungseinrichtung in Richtung von deren Fahrtstrecke auf der ebenen Fläche beobachtbar ist, eine Steuereinheit, die mit der ersten Kamera und der zweiten Kamera signaltechnisch verbunden ist, eine Akkumulator- oder Batterieeinheit, mit der zumindest die Kameras und die Steuereinheit mit Energie versorgt werden, und einen oberen Teil mit einer Schutzhaube. Die erste Kamera und die zweite Kamera sind in dem oberen Teil angeordnet und durch die Schutzhaube gegenüber der Umgebung abgeschirmt.

In vorteilhafter Weiterbildung der Erfindung ist ein Druckbehälter vorgesehen, der ein unter Druck stehendes Fluid enthält. Dieser Druckbehälter kann zweckmäßigerweise in dem Untersatz der Überwachungseinrichtung angeordnet bzw. aufgenommen sein. Der Druckbehälter ist mit Mitteln ausgestattet, um das Fluid permanent aus dem Druckbehälter zu entnehmen und auf eine äußere Linse des Objektivs zumindest der ersten Kamera zu richten. Dies hat zur Folge, dass Partikel (z.B. Schmutzpartikel, Staub oder dergleichen), die auf der Linse anhaften bzw. sich dort ablagern können, durch das unter Druck stehende und entsprechend auf die Linse gerichtete Fluid weggeblasen werden. Somit ist gewährleistet, dass durch das Objektiv der Kamera stets ein "freier Blick" möglich ist und damit Bildbereiche von der hüttentechnischen Anlage ohne jegliche Einschränkung erzeugt werden.

Ergänzend und/oder alternativ kann in vorteilhafter Weiterbildung der Erfindung vorgesehen sein, dass der Motor mit Druckluft betrieben und mit dem Druckbehälter gekoppelt werden kann, so dass auf die Räder oder Fahrketten eine Antriebskraft ausgeübt wird. Ein solches Antriebsprinzip des Motors gewährleistet eine Mobilität für die Überwachungseinrichtung insbesondere für den Fall, dass andere Energiequellen, z.B. Batterien oder Akkus, in solcher Weise erschöpft sind, dass hiermit ein weiterer Antrieb der Räder bzw. Fahrketten nicht möglich ist.

Die vorliegende Erfindung betrifft des Weiteren eine Steuerungsanlage zum Betrieb einer hüttentechnischen Anlage, wobei eine mobile Überwachungseinrichtung wie vorstehend genannt zum Einsatz kommt. Hierbei weist die Überwachungseinrichtung zumindest eine erste Kamera auf, wobei zumindest ein erforderlicher Betriebsprozess der hüttentechnischen Anlage auf Grundlage eines eingestellten Bildbereichs der ersten Kamera, mit dem ein Bereich der hüttentechnischen Anlage beobachtet wird, ferngesteuert werden kann. In vorteilhafter Weiterbildung einer solchen Verwendung der vorstehend genannten mobilen Überwachungseinrichtung kann diese im Bereich der hüttentechnischen Anlage auf einer im Wesentlichen ebenen Fläche frei verfahren werden.

Der Erfindung liegt die wesentliche Erkenntnis zugrunde, dass die mobile Überwachungseinrichtung konkret auf den Einsatz bei einer hüttentechnischen Anlage bzw. in unmittelbarer Nähe hiervon angepasst ist. Dies wird einerseits dadurch erreicht, dass zumindest die erste und zweite Kamera in dem oberen Teil der Überwachungseinrichtung angeordnet sind und dabei durch die Schutzhaube gegenüber der Umgebung abgeschirmt sind. Ergänzend und/oder alternativ wird dies dadurch erreicht, dass die Objektive der Kameras frei von Verschmutzungen gehalten werden, indem das Fluid aus dem Druckbehälter auf eine äußere Linse des Objektivs einer Kamera gerichtet wird, so dass auf der Linse anhaftende Partikel weggeblasen werden. Entsprechend lässt sich die mobile Überwachungseinrichtung auf der ebenen Fläche, bei der es sich um einen befahrbaren Gefährdungsbereich der hüttentechnischen Anlage insbesondere in Form einer Gießbühne, einer Ofenbühne und/oder eines Hüttenflurs handeln kann, ohne Sichtbehinderung zielgerichtet bewegen.

Die mobile Überwachungseinrichtung gemäß der vorliegenden Erfindung bildet für sich ein autonomes System, das in Form der Akkumulator- oder Batterieeinheit über eine eigene Energieversorgung verfügt, mit der zumindest die Kameras, die Steuereinheit und ggf. weitere Messgeräte, mit denen die Überwachungseinrichtung bestückt sein kann, mit Energie versorgt werden. Dank der Räder oder verketten, mit denen der Untersatz ausgestattet ist, lässt sich die mobile Überwachungseinrichtung auf einer ebenen Fläche frei verfahren bzw. bewegen. Zum Antrieb der Überwachungseinrichtung ist zumindest ein Rad oder zumindest eine Fahrkette mit dem Motor gekoppelt und dadurch angetrieben ist. Falls der Motor als Elektromotor ausgebildet ist, erfolgt dessen Energieversorgung durch die Akkumulator- oder Batterieeinheit. Bei Vorliegen eines Energieengpasses, wenn die Kapazität der Akkumulator- oder Batterieeinheit erschöpft ist, kann die Mobilität der Überwachungseinrichtung dadurch aufrechterhalten werden, dass der Motor - bei geeigneter Ausrüstung hierzu - mit Fluid bzw. Druckluft aus dem Druckbehälter betrieben wird.

Mit Hilfe der mobilen Überwachungseinrichtung ist es möglich ist, einen Betriebszustand einer hüttentechnischen Anlage (z.B. ein Prozesszustand und/oder ein Anlagenzustand von Anlagenkomponenten und deren Umgebung) zumindest visuell und ggf. auch akustisch und/oder in Bezug auf eine Bestimmung von Gaskonzentrationen zu überwachen, nämlich im Hinblick auf einen jeweiligen Einsatzort dieser Überwachungseinrichtung variabel und ortsungebunden. In dieser Hinsicht besteht ein wichtiges Merkmal der Erfindung darin, dass ein Bewegen bzw. Verfahren der mobilen Überwachungseinrichtung auf einer im Wesentlichen ebenen Fläche unabhängig von vorgegebenen Fahrbahnen ist und keine Schienenbindung hat. Somit ist der Aktionsbereich der mobilen Überwachungseinrichtung frei auf den Ebenen bzw. ebenen Fläche einer hüttentechnischen Anlage gegeben. Zu diesem Zweck weist diese Überwachungseinrichtung einen fahrbaren Untersatz auf, der mit Hilfe eines Motors und vorzugsweise ferngesteuert von einem Leitstand der Anlage auf einer im Wesentlichen ebenen Fläche verfahren werden kann. Hierbei werden die Bildsignale der ersten Kamera und ggf. weitere aufgenommene Messsignale insbesondere drahtlos an eine Auswertungs- oder Darstellungseinheit gesendet, die im Leitstand der zu überwachenden hüttentechnischen Anlage vorgesehen sein kann. Dies bedeutet, dass ein von zumindest der ersten Kamera aufgenommenes Bild in den Leitstand der hüttentechnischen Anlage übermittelt wird, wobei dann dem Bedienpersonal dieses Bild zur Bedienung, Beobachtung und Überwachung der Anlage zur Verfügung gestellt wird.

Mit Hilfe der Erfindung wird der Vorteil erreicht, dass für das Bedienpersonal der Anlage in flexibler bzw. variabler Weise eine Überwachung und Fernbedienung der Anlage aus einem gesicherten und geschützten Bereich, z.B. von dem Leitstand aus möglich ist. Mit Unterstützung der Bilder zumindest der ersten Kamera können insbesondere gefahrenträchtige Steuerfunktionen mit einer hohen Betriebssicherheit, z.B. aus dem Leitstand der Anlage heraus, ausgeführt werden, was ansonsten - bei herkömmlichen Anlagen - die Anwesenheit von Personen bzw. Bedienpersonal in unmittelbarer Nähe eines Gefährdungsbereichs der Anlage erforderlich und damit ggf. nicht durchführbar macht. Anders ausgedrückt, werden beim Einsatz der vorliegenden Erfindung Handlungen des Bedienpersonals in Gefährdungsbereichen der Anlage, d.h. im Bereich von Gefahrenquellen (z.B. Bereiche mit hohen Umgebungstemperaturen, Bereiche mit dem Risiko von unbeabsichtigt ausbrechendem flüssigem heißen Stahl, Bereiche unterhalb von hängenden bzw. schwebenden Lasten von hüttentechnischen Einrichtungen) vermieden.

Durch den fahrbaren Untersatz der mobilen Überwachungseinrichtung ist es für das Bedienpersonal von dem Leitstand der Anlage aus möglich, jegliche relevanten Bereiche einer zu überwachenden hüttentechnischen Anlage - je nach Bedarf - gezielt zu inspizieren, und hierbei diese Bereiche visuell, akustisch und/oder in Bezug auf die Feststellung von bestimmten Gaskonzentrationen in der Umgebung dieser Bereiche gezielt zu überprüfen. Auf Grundlage dessen können dann z.B. gezielte Komponenten der hüttentechnischen Anlage in diesen Bereichen vorzugsweise mittels einer Fernsteuerung angesteuert werden.

In vorteilhafter Weiterbildung der Erfindung kann die mobile Überwachungseinrichtung insbesondere drahtlos von einem Leitstand der hüttentechnischen Anlage aus ferngesteuert werden. Eine solche Fernsteuerung umfasst auch eine gezielte Ansteuerung der zumindest ersten Kamera, z.B. die Einstellung des Bildbereichs der ersten Kamera in Bezug auf eine vorbestimmte Richtung und/oder in Bezug auf einen Fokus hinsichtlich eines zu überwachenden Bereichs der hüttentechnischen Anlage. Hierbei werden die Bilddaten der ersten Kamera, wie vorstehend bereits erläutert, an den Leitstand übertragen und dort für das Bedienpersonal zwecks einer Überwachung der Anlage für das Bedienpersonal bereitgestellt. Eine solche Art der Fernsteuerung der mobilen Überwachungseinrichtung steht in Einklang mit deren erläuterten variablen Verfahrbarkeit auf jeglichen Ebenen der zu überwachenden hüttentechnischen Anlage.

In vorteilhafter Weiterbildung der Erfindung kann die zumindest erste Kamera integrierte Funktionen aufweisen. Dies bedeutet, dass mittels dieser ersten Kamera sowohl ein zu überwachender Bereich der hüttentechnischen Anlage als auch ein Umgebungsbereich der mobilen Überwachungseinrichtung in Richtung von deren Fahrtstrecke beobachtet werden. Somit kann ein Fahrtbetrieb der mobilen Überwachungseinrichtung ebenfalls mit Hilfe der ersten Kamera insbesondere von dem Leitstand der hüttentechnischen Anlage aus ferngesteuert werden. Dies führt zu dem Vorteil, dass in der mobilen Überwachungseinrichtung eine reduzierte Anzahl von Kameras vorgesehen sind.

Die mobile Überwachungseinrichtung weist eine zweite Kamera auf, mit der ein Umgebungsbereich der mobilen Überwachungseinrichtung in Richtung von deren Fahrtstrecke auf der ebenen Fläche beobachtet wird. Hierbei wird dann ein zu überwachender Bereich der hüttentechnischen Anlage ausschließlich mittels der ersten Kamera beobachtet. Dies führt zu dem Vorteil, dass ggf. ein gezieltes Zoomen mit der ersten Kamera z.B. in einer Richtung nach oben möglich ist, währenddessen die mobile Überwachungseinrichtung weiterhin auf der ebenen Fläche verfahren wird, was unter Verwendung der zweiten Kamera realisiert wird.

In vorteilhafter Weiterbildung der Erfindung kann die mobile Überwachungseinrichtung auch zumindest ein Tonmessgerät (z.B. ein Mikrofon) aufweisen, dessen Signale an den Leitstand der hüttentechnischen Anlage übertragen werden. Hierbei ist es zweckmäßig, wenn die Signale des Tonmessgerätes im Leitstand der hüttentechnischen Anlage als Akustiksignal bereitgestellt werden. Ein solches Tonmessgerät kann in die zumindest erste Kamera integriert sein, nach Art einer an sich bekannten Fernsehkamera. Mit Hilfe eines solchen Tonmessgerätes kann eine Geräuschentwicklung an oder in der Anlage (z.B. Lichtbogenzündungen oder Lichtbogenüberschläge) festgestellt werden, wobei dann entsprechende Signale dem Bedienpersonal im Leitstand als Akustiksignal zur Verfügung gestellt werden, um den Prozess der Anlage zu beurteilen und eine evt. Gefährdung zu erkennen.

Dadurch, dass die mobile Überwachungseinrichtung einen oberen Teil aufweist, in den zumindest die erste Kamera integriert ist, kann dieser obere Teil dann relativ zu einem unteren Teil der mobilen Überwachungseinrichtung verdreht werden, z.B. in einem Winkel von bis zu 360°. Durch ein entsprechendes Verdrehen des oberen Teils ist somit eine "Rundum"-Beobachtung im Umfeld der mobilen Überwachungseinrichtung gewährleistet.

In vorteilhafter Weiterbildung der Erfindung kann in oder an dem oberen Teil der mobilen Überwachungseinrichtung zumindest eine weitere Messeinheit vorgesehen sein, um weitere Messsignale der hüttentechnischen Anlage und/oder deren Umgebung aufzunehmen. Hierbei ist es zweckmäßig, wenn diese weitere Messeinheit ebenfalls insbesondere drahtlos mit dem Leitstand der hüttentechnischen Anlage verbunden ist und auf einen zu überwachenden Bereich dieser Anlage ausgerichtet werden kann. Entsprechend ist es möglich, mit dieser weiteren Messeinheit einen Betriebszustand der hüttentechnischen Anlage zu überwachen.

Bei der vorstehend genannten weiteren Messeinheit der mobilen Überwachungseinrichtung kann es sich um folgende Geräte bzw. Komponenten handeln:
- Wärmebildkamera, mittels der eine wärmetechnische Betrachtung bzw. Analyse von Behältern der hüttentechnischen Anlage durchgeführt wird, die mit heißem und insbesondere flüssigen Material gefüllt sind. Beispiele für diese Behälter sind: Pfannen, Konverter, Zwischenbehälter, Reduktionsöfen, Lichtbogenöfen, Pfannenöfen, RH-Anlagen, Vakuumanlagen. Diesbezüglich wird darauf hingewiesen, dass es sich bei einer Wärmebildkamera nach der vorliegenden Erfindung um eine thermografische Kamera handelt.
- Infrarot-Pyrometer, mit dem Oberflächentemperaturmesswerte von Komponenten der hüttentechnischen Anlage (z.B. Elektrodentemperatur, Deckeltemperaturen, Bodentemperaturen), von mit einer solchen Anlage erzeugten Produkten (z.B. Brammen) und/oder von flüssigen Schmelzen bzw. Schlacken festgestellt werden.
- Gas-Messgerät, mit dem die Konzentration eines bestimmten Gases in der Umgebung der hüttentechnischen Anlage und vorzugsweise in unmittelbarer Nähe der mobilen Überwachungseinrichtung festgestellt werden kann. Zu den Gasen, die mit einem solchen Gas-Messgerät detektiert werden können, gehören insbesondere Argon (Ar), Ammoniak (NH3), Kohlendioxid (CO2), Kohlenmonoxid (CO), Chlor (Cl2), Chlordioxid (ClO2), Wasserstoff (H2), Chlorwasserstoff (HCl), Cyanwasserstoff (HCN), Schwefelwasserstoff (H2S), Methan (CH4), Stickstoffmonoxid (NO), Stickstoffdioxid (NO2), Sauerstoff (02), Phosphin (PH3) und/oder Schwefeldioxid (SO2).

In vorteilhafter Weiterbildung der Erfindung kann eine Schutzhaube vorgesehen sein, mit der die weitere Messeinheit, die in dem oberen Teil der mobilen Überwachungseinrichtung vorgesehen ist, gegenüber der Umgebung abgeschirmt wird. Falls diese weitere Messeinheit in Form einer Wärmebildkamera ausgebildet ist, ist es zweckmäßig, wenn diese Schutzhaube zumindest in Bezug auf Wärmestrahlung bzw. IR-Strahlung durchlässig ist. Die Schutzhaube kann aus einem Sicherheitsglas bestehen oder zumindest teilweise ein solches Sicherheitsglas aufweisen.

Eine gewünschte Temperaturfestigkeit der mobilen Überwachungseinrichtung kann dadurch erreicht werden, dass alle daran angebrachten Kameras und/oder Messgeräte temperaturfest ausgebildet sind, z.B. für eine Dauertemperatur von 40 °C oder auch höhere Temperaturen. Zu diesem Zweck kann vorgesehen sein, dass die Oberflächen der mobilen Überwachungseinrichtung und der daran angebrachten Kameras bzw. Messgeräte jeweils aus hitzefestem aluminisierten Para-Aramid ausgebildet sind.

Eine Hitzebeständigkeit für den fahrbaren Untersatz der mobilen Überwachungseinrichtung und der daran vorgesehenen Räder oder Fahrketten kann durch eine Beschichtung mit hitzebeständigem Polyesterharz erreicht werden. Alternativ hierzu ist es möglich, diese Räder bzw. Fahrketten zumindest teilweise aus einem solchen hitzebeständigen Polyesterharz auszubilden.

Nachstehend ist ein Ausführungsbeispiel der Erfindung anhand einer schematisch vereinfachten Zeichnung im Detail beschrieben.

Es zeigen:
- Fig. 1: eine prinzipiell vereinfachte Seitenansicht einer hüttentechnischen Anlage, bei der die vorliegende Erfindung eingesetzt wird,
- Fig. 2: eine prinzipiell vereinfachte Draufsicht auf die hüttentechnische Anlage von Fig. 1,
- Fig. 3: eine prinzipiell vereinfachte Seitenansicht einer mobilen Überwachungseinrichtung, mit der die vorliegende Erfindung bei einer Anlage von Fig. 1 durchgeführt wird,
- Fig. 4: eine Ansicht von vorne der mobilen Überwachungseinrichtung von Fig. 3, und
- Fig. 5: eine Draufsicht auf die mobile Überwachungseinrichtung von Fig. 3.

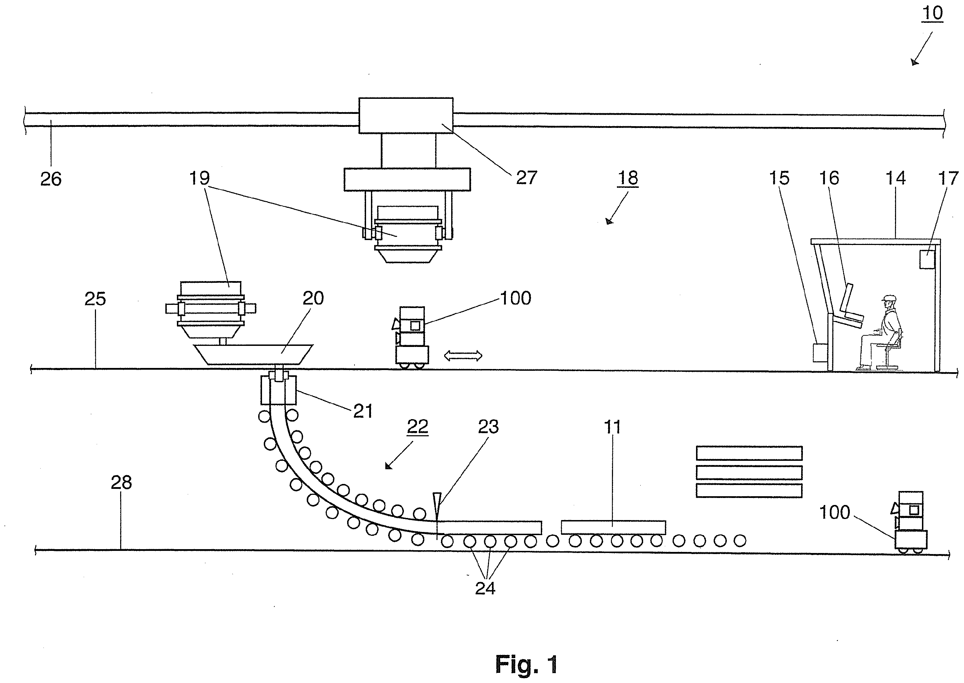

Nachstehend ist unter Bezugnahme auf die Fig. 1 bis 5 eine bevorzugte Ausführungsform einer mobilen Überwachungseinrichtung 100 zur Verwendung bei einer hüttentechnischen Anlage 10, und auch eine Steuerungsanlage zum Betrieb einer hüttentechnischen Anlage mit einer solchen mobilen Überwachungseinrichtung erläutert. Gleiche Merkmale in der Zeichnung sind jeweils mit gleichen Bezugszeichen versehen. An dieser Stelle wird gesondert darauf hingewiesen, dass die Zeichnung lediglich vereinfacht und insbesondere ohne Maßstab dargestellt ist.

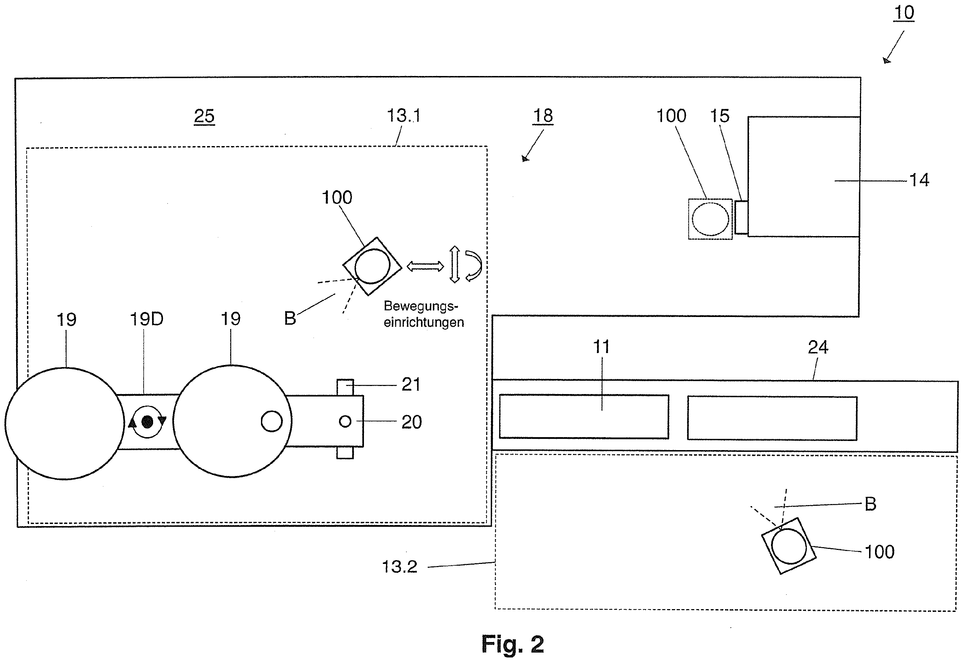

Ausweislich der Darstellungen in Fig. 1 und Fig. 2 kann eine hüttentechnische Anlage 10 eine Stranggießanlage 18 umfassen, bei der mit Hilfe einer Pfanne 19 und einem Zwischenbehälter 20 eine Kokille 21 mit heißem Metall, vorzugsweise Stahl, befüllt wird. Unterhalb der Kokille 21 ist eine Strangführung 22 angeordnet, entlang der ein Metallstrang nach dem Austreten aus der Kokille 21 geführt wird. In der Strangführung 22 kann eine Trenneinrichtung 23 angeordnet sein. Im Anschluss an die Strangführung 22 ist ein Rollgang 24 vorgesehen, auf dem ein mit der Anlage 10 hergestelltes metallisches Produkt 11, z.B. eine Bramme, transportiert wird.

Oberhalb der Kokille 21 ist an einer Kranbahn 26 ein Kran 27 angebracht, mit dem die Pfanne 19 - bei Bedarf - gehalten bzw. verfahren wird.

Zum Betrieb der hüttentechnischen Anlage 10 ist ein Leitstand 14 vorgesehen, der für ein Bedienpersonal einen geschützten und somit sicheren Raum bildet. Der Leitstand 14 ist mit einer Basisstation 15 ausgerüstet, welche die Funktion einer Daten -/Empfänger -/Ladestation übernimmt, was nachstehend noch gesondert erläutert ist. Des Weiteren sind innerhalb des Leitstands 14 ein Monitor 16 und ein Lautsprecher 17 vorgesehen, was für den Betrieb bzw. eine Steuerung von Anlagenkomponenten der Anlage 10 hilfreich ist.

In der Draufsicht von Fig. 2 sind jeweils mit gestrichelten Linien sogenannte Gefährdungsbereiche der Anlage 10 symbolisiert. Ein Gefährdungsbereich 13.1 besteht angrenzend zum Pfannendrehturm 19D, mit dem die Pfanne 19 in Position bezüglich des Zwischenbehälters 20 gebracht wird. Ein weiterer Gefährdungsbereich 13.2 besteht angrenzend zum Rollgang 24, auf dem eine Bramme 11 transportiert wird.

Die mobile Überwachungseinrichtung 100 dient zur gezielten Überwachung von bestimmten Bereichen der Anlage 10. Die Überwachungseinrichtung 100 lässt sich auf einer vorzugsweise im Wesentlichen ebenen Fläche 12 (vgl. Fig. 1, Fig. 3, Fig. 4) frei verfahren. Bei dieser ebenen Fläche 12 kann es sich um die Gießbühne 25 der Anlage 10 handeln, oder auch um die Ebene des Brammenauslaufs 28 bzw. den Hallenboden einer Halle, in der die Anlage 10 installiert ist. Bezüglich einer Verfahrbarkeit der mobilen Überwachungseinrichtung 100 auf der ebenen Fläche 12 ist von Bedeutung, dass dies ohne Bindung an eine feste Fahrbahn oder Schienen möglich ist. Somit kann die mobile Überwachungseinrichtung 100 - ihrer Bezeichnung entsprechend - insbesondere in den vorstehend genannten Gefährdungsbereichen 13.1, 13.2 der Anlage 10 frei bewegt werden.

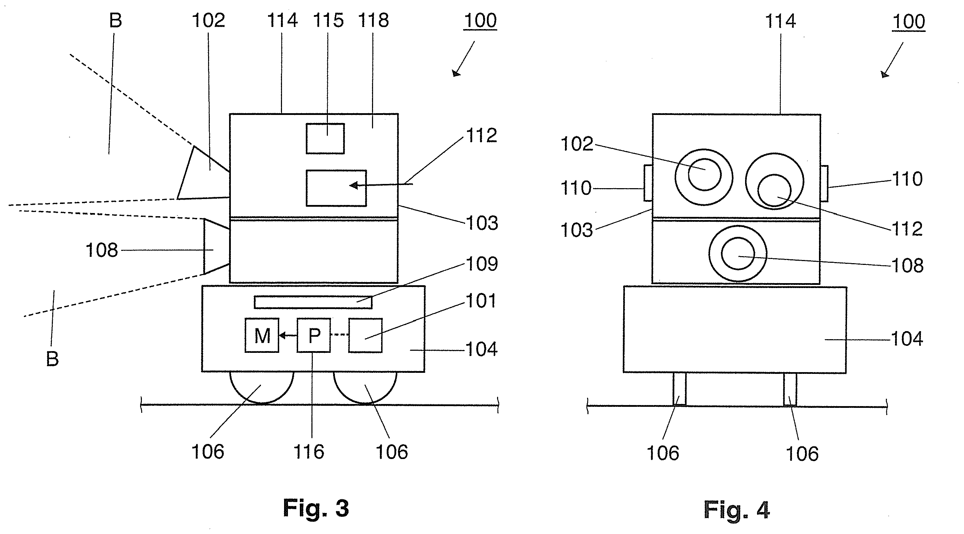

Nachstehend sind der Aufbau der mobilen Überwachungseinrichtung 100 und deren Komponenten anhand der Fig. 3-5 im Detail erläutert:
Die mobile Überwachungseinrichtung 100 umfasst einen Untersatz 104, der mit Rädern 106 ausgestattet ist. Zumindest eines dieser Räder 106, vorzugsweise alle Räder 106, sind mit einem Motor M gekoppelt, wodurch ein Bewegen der Überwachungseinrichtung 100 auf der Fläche 12 realisiert wird. Der Motor M kann entweder als Elektromotor ausgebildet sein, oder auch mittels Druckluft betrieben werden, was nachstehend noch gesondert erläutert ist.

Die mobile Überwachungseinrichtung 100 umfasst mehrere Kameras und Messgeräte, mit denen eine Umgebung der Überwachungseinrichtung 100 beobachtet und analysiert werden kann. Hierzu gehören eine erste Kamera 102, eine zweite Kamera 108, ein Tonmessgerät 110 und zumindest eine weitere Messeinheit 112, die alle an einem oberen Teil 103 der Überwachungseinrichtung 100 vorgesehen sein können. Eine Steuereinheit 101 ist mit den Kameras und den weiteren Messgeräten der Überwachungseinrichtung 100 signaltechnisch verbunden, so dass einerseits ein Empfang von Steuerungssignalen von dem Leitstand 14 durch die Steuereinheit 101 möglich ist und dann von der Steuereinheit 101 an die einzelnen Kameras bzw. Messgeräte der Überwachungseinrichtung 100 weitergeleitet werden können, und andererseits Messsignale der Kameras und der weiteren Messgeräten über die Steuereinheit 101 an den Leitstand 14 gesendet werden können.

Für eine gewünschte Temperaturfestigkeit dieser Komponenten kann der obere Teil 103 mit einer Schutzhaube 114, die z.B. aus Sicherheitsglas besteht, ausgerüstet sein.

Die erste Kamera 102 dient zu dem Zweck, einen bestimmten Bereich der Anlage 10 zumindest visuell gezielt zu überwachen.

Die zweite Kamera 108 dient zu dem Zweck, einen Umgebungsbereich der Überwachungseinrichtung 100 in Richtung von deren Fahrtstrecke auf der ebenen Fläche 12 zu beobachten.

Für einen Schutz der ersten Kamera 102, der zweiten Kamera 108 und der weiteren Messeinheit 112 gegenüber den relativ hohen Temperaturen der hüttentechnischen Anlage 10 und möglicher Verschmutzungen ist vorgesehen, dass diese Komponenten innerhalb des oberen Teils 103 der Überwachungseinrichtung 100 angeordnet bzw. aufgenommen und durch die Schutzhaube 114 gegenüber der Umgebung abgeschirmt sind.

Die von der ersten Kamera 102 und von der zweiten Kamera 108 aufgenommenen Bilder werden drahtlos an den Leitstand 14 der Anlage 10 übertragen. Für diese drahtlose Videoübertragung wird für die Zwecke der vorliegenden Erfindung eine Bildrate von ≤ 25 Bildern/Sekunde als ausreichend angesehen.

Nach einer Ausführungsform der Erfindung ist es möglich, die erste Kamera 102 und die zweite Kamera 108 in eine gemeinsame Zentralkamera zu integrieren. Mittels einer solchen Zentralkamera ist es möglich, sowohl einen Bereich der hüttentechnischen Anlage 10 zu beobachten bzw. zu überwachen als auch einen Umgebungsbereich der mobilen Überwachungseinrichtung 100 in Richtung von deren Fahrtstrecke auf der ebenen Fläche 12 zu beobachten, zwecks einer Steuerung der Fahrtbewegung der Überwachungseinrichtung 100 auf der ebenen Fläche 12.

Die weitere Messeinheit 112 kann aus einer Wärmebildkamera, einem Infrarot-Pyrometer oder aus einem Gas-Messgerät gebildet sein. Diesbezüglich ist es auch möglich, mehrere solcher Geräte an dem oberen Teil 103 der mobilen Überwachungseinrichtung 100 vorzusehen.

Des Weiteren weist die mobile Überwachungseinrichtung 100 eine Akkumulator- oder Batterieeinheit 109 auf, die in dem Untersatz 104 angeordnet sein kann. Diese Akkumulator- oder Batterieeinheit 109 dient zur Energieversorgung für die Überwachungseinrichtung 100, und zumindest von deren Kameras 102, 108, der Steuereinheit 101 und der weiteren Messeinheit 112.

An dieser Stelle wird gesondert darauf hingewiesen, dass eine Neigung der ersten Kamera 102 in seitlicher Richtung und/oder in vertikaler Richtung (z.B. um bis zu 90°) individuell eingestellt werden kann, um deren Bildbereich B gezielt auf Teile bzw. Komponenten der Anlage 10 auszurichten. Durch die Einstellung der Neigung der ersten Kamera 102 wird ein Bildbereich B hiervon auf den zu überwachenden Bereich der Anlage 10 ausgerichtet, z.B. in einer Richtung nach schräg oben, wie es in der Darstellung von Fig. 3 veranschaulicht ist.

Auch für die zweite Kamera 108 gilt, dass deren Neigung - in gleicher Weise wie bei der ersten Kamera 102 - und somit der Bildbereich B der zweiten Kamera 108 gezielt eingestellt werden kann, z.B. in Richtung der Fläche 12, auf welcher die mobile Überwachungseinrichtung 100 bewegt bzw. verfahren wird, oder in einer Richtung nach vorne, in der die Fahrtrichtung der Überwachungseinrichtung 100 liegt.

Die Steuersignale zur Einstellung der Kameras 102, 108 können vom Leitstand 14 der Anlage 10 ausgegeben werden, und werden nach einem Empfang durch die Steuereinheit 101 geeignet an die Kameras 102, 108 weitergeleitet.

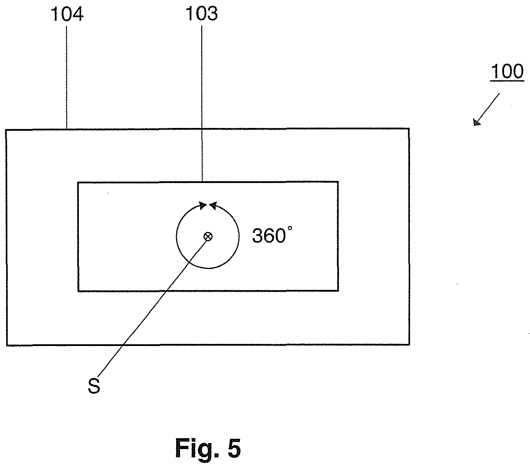

Der obere Teil 103 der mobilen Überwachungseinrichtung 100 ist um eine vertikale Schwenkachse S drehbar gelagert, und kann somit relativ zum Untersatz 104 verdreht werden. Die Draufsicht von Fig. 5 verdeutlicht, dass der obere Teil 103 sich relativ zum Untersatz 104 um 360° verdrehen lässt. In dieser Weise lassen sich die erste Kamera 102, das Tonmessgerät 110 und die weitere Messeinheit 112 gezielt in Richtung von bestimmten Bereichen der Anlage 10 ausrichten.

Zweckmäßigerweise sind die erste Kamera 102, die zweite Kamera 108 und auch die weitere Messeinheit 112 in dem oberen Teil 103 der Überwachungseinrichtung 100 angeordnet bzw. darin aufgenommen, und dabei durch die Schutzhaube 114 gegenüber der Umgebung abgeschirmt. In dieser Weise wird eine Verschmutzung dieser Messgeräte und/oder eine Schädigung durch Strahlung oder vergleichsweise hohe Temperaturen, die von der hüttentechnischen Anlage 10 ausgehen, wirkungsvoll verhindert.

Zu Wartungszwecken und/oder zur Durchführung einer Reparatur der Messgeräte, die in dem oberen Teil 103 der Überwachungseinrichtung 100 aufgenommen sind, kann vorgesehen sein, dass die Schutzhaube 114 von dem oberen Teil 103 abnehmbar oder zumindest geöffnet werden kann, z.B. durch Schwenken oder ein Verschieben in einer Offenstellung. In dieser Weise ist ein Zugang bzw. eine Erreichbarkeit zu den Kameras 102, 108 bzw. der weiteren Messeinheit 112 gewährleistet.

Insbesondere für den Fall, dass die weitere Messeinheit 112 in Form einer Wärmebildkamera oder eines Infrarot-Pyrometer ausgebildet ist, empfiehlt sich, dass die Schutzhaube 114 in Bezug auf Wärmestrahlung und/oder IR-Strahlung durchlässig ist. Zu diesem Zweck ist in der Schutzhaube 114 ein Fenster 115 vorgesehen, welches gegenüber Wärmestrahlung und/oder IR-Strahlung durchlässig ist. Diesbezüglich versteht sich, dass dann ein Objektiv einer Wärmebildkamera oder eines Infrarot-Pyrometers geeignet mit diesem Fenster 115 ausgerichtet sind.

Zu den Abmessungen der mobilen Überwachungseinrichtung 100 darf darauf hingewiesen werden, dass deren Höhe weniger als 4 Meter beträgt, vorzugsweise weniger als 3 Meter. Sowohl der obere Teil 103 als auch der Untersatz 104 können jeweils zylinderförmig ausgebildet sein, mit einem Durchmesser von z.B. weniger als 2 Meter, durch eine robuste und raumsparende Ausgestaltung der Überwachungseinrichtung 100 erreicht wird. Damit ist gewährleistet, dass sich die mobile Überwachungseinrichtung in den Gefährdungsbereichen 13.1, 13.2 der hüttentechnischen Anlage 10 frei verfahren lässt, ohne dabei mit Teilen diese Anlage 10 in Berührung zu kommen.

Wie bereits erläutert, ist die mobile Überwachungseinrichtung 100 mit einer Steuereinheit 101 ausgerüstet. Diese Steuereinheit 101 verfügt über eine Fernsteuerung, die drahtlos mit einer Steuerung des Leitstands 14 in Verbindung steht. In dieser Weise können sowohl der Fahrtbetrieb der mobilen Überwachungseinrichtung 100 als auch deren Kameras und Messgeräte von dem Leitstand 14 aus ferngesteuert werden. Dies gilt auch für die erläuterte Verdrehbarkeit des oberen Teils 103 relativ zum Untersatz 104. Entsprechend kann die mobile Überwachungseinrichtung 100 insbesondere in einem Gefährdungsbereich 13.1, 13.2 der Anlage 10 in verschiedenen Bewegungsrichtungen frei verfahren werden, was durch die Pfeile in Fig. 2 symbolisiert ist.

Die mobile Überwachungseinrichtung 100 umfasst einen Druckbehälter 116 (vgl. Fig. 3), der vorzugsweise innerhalb des Untersatzes 104 aufgenommen ist. Dieser Druckbehälter 116 enthält ein Fluid, vorzugsweise Luft, das bzw. die unter Druck steht, was in der Fig. 3 durch den Buchstaben "P" symbolisiert ist. Die Position, an welcher der Druckbehälter 116 innerhalb des Untersatzes 104 aufgenommen ist, ist von außen (z.B. durch eine verschließbare Klappe) leicht zugänglich, um den Druckbehälter 116 - bei Bedarf bzw. Leerstand - gegen einen "frischen" Druckbehälter austauschen zu können

Der Druckbehälter 116 ist mit (nicht gezeigten) Mitteln ausgestattet, um das Fluid permanent aus dem Druckbehälter 116 zu entnehmen und auf eine äußere Linse des Objektivs der Kameras 102, 108 und/oder auf das Mikrofon 110 und/oder auf die weitere Messeinheit 112 zu richten, so dass darauf anhaftende Partikel weggeblasen werden. In dieser Weise kann eine Verschmutzung der genannten Geräte durch Ablagerung von Staub oder dergleichen wirkungsvoll und mit einfachen Mitteln verhindert werden. Die genannten Mittel, mit denen das Fluid aus dem Druckbehälter 116 entnommen und auf die Kameras 102, 108, das Mikrofon 110 und/oder die weitere Messeinheit 112 gerichtet wird, umfassen geeignete Druck- bzw. Verbindungsleitungen, ggf. Ventile und Düsen, mit denen das unter Druck stehende Fluid gezielt auf die genannten Geräte geblasen wird.

Die gestrichelte Linie zwischen dem Druckbehälter 116 und der Steuereinheit 101 (vgl. Fig. 3) symbolisiert, dass der Druckbehälter 116 und hieran vorgesehene Ventile mit Signalen von der Steuereinheit 101 geeignet angesteuert werden können, in Bezug auf eine gezielte Entnahme des Fluids aus dem Druckbehälter 116.

Der Motor M kann bei Bedarf mit dem Druckbehälter 116 gekoppelt werden, zwecks Antrieb des Motors M mittels des Fluids unter Druck. Dies ist in Fig. 3 durch einen Pfeil symbolisiert.

Die mobile Überwachungseinrichtung 100 ist mit weiterer Antriebstechnik, Lenktechnik, Batterietechnik (z.B. unter Verwendung von Akkus) und Ladetechnologien ausgestattet.

Die Leistungsversorgung des Motors M kann alternativ zu der Versorgung mit dem Fluid unter Druck auch durch die Akkumulator- oder Batterieeinheit 109 erfolgen. Für diesen Fall ist der Motor M als Elektromotor ausgebildet.

Zum Laden der Akkumulatoreinheit 109 kann die mobile Überwachungseinrichtung 100 an die Basisstation 15 angedockt werden, was in der Fig. 2 durch gestrichelte Linien symbolisiert ist.

Ergänzend wird darauf hingewiesen, dass die an dem Leitstand 14 vorgesehene Basisstation 15 mit einer Sende- und Empfangseinheit ausgestattet ist. Entsprechend können von der Basisstation 15 einerseits Steuerbefehle an die Steuereinheit 101 der mobilen Überwachungseinrichtung 100 gesendet werde, und andererseits Signale von der mobilen Überwachungseinrichtung 100 und deren Geräten empfangen werden.

Der Einsatz der erfindungsgemäßen mobilen Überwachungseinrichtung 100 bei der hüttentechnischen Anlage 10 funktioniert nun wie folgt:
Im Betrieb der Anlage 10 wird die mobile Überwachungseinrichtung 100 drahtlos von dem geschützten Leitstand 14 aus ferngesteuert. Hierbei steuert das Bedienpersonal die Überwachungseinrichtung 100 für das Bewegen auf der Fläche 12 mit Hilfe des Kamerabildes der zweiten Kamera 108, das auf dem Monitor 16 angezeigt wird. Das Kamerabild der zweiten Kamera 108 zeigt dem Bedienpersonal die Situation in der Bewegungsrichtung der Überwachungseinrichtung 100, so dass auf Grundlage dessen eine Fahrtrichtung nach vorne, hinten, rechts oder links eingestellt werden kann.

Sobald die mobile Überwachungseinrichtung 100 ihren gewünschten Beobachtungs- bzw. Messort erreicht hat, kann das Bedienpersonal z.B. die erste Kamera 102 auf einem bestimmten Bereich der Anlage 10 ausrichten, und ggf. für das Objektiv dieser ersten Kamera 102 eine Zoom-Funktion einstellen. Dieses Ausrichten der ersten Kamera 102 erfolgt ebenfalls ferngesteuert von dem Leitstand 14 aus. Beispielsweise kann bei stehendem Untersatz 14 der obere Teil 103 durch ein Verdrehen um die Schwenkachse S gezielt auf einen zu überwachenden Bereich der Anlage eingestellt werden.

Das Bedienpersonal hat nun die Möglichkeit, erforderliche Betriebsprozesse der Anlage 10, vorzugsweise Fahr-, Dreh-, Hebe- oder Senkbewegungen oder Öffnungs- /Schließvorgänge von hüttentechnischen Einrichtungen, mittels der eingestellten Bildbereiche der ersten Kamera 102 fernzusteuern. Beispielsweise können nun Prozesssteuervorgänge der Anlage 10 ferngesteuert eingeleitet, überwacht oder gestoppt werden, ohne dass sich dabei eine Person in den Gefährdungsbereichen 13.1, 13.2 aufhält. Entsprechend kann eine Beobachtung bzw. Visualisierung der Prozesssituation mit Hilfe der Erfindung erfolgen, wobei eine Steuerfunktion des Prozesses auch über andere Systeme erfolgen kann.

Insbesondere im Betrieb der Anlage 10 wird ein Verschmutzen der äußeren Linsen der Objektive der Kameras 102, 108 wirkungsvoll dadurch verhindert, dass das Fluid, vorzugsweise Druckluft, permanent aus dem Druckbehälter 116 entnommen und gezielt auf die Linsen gerichtet wird. In Folge dessen werden (Schmutz-) Partikel, die sich ggf. auf der Linse ablagern, weggeblasen bzw. weggespült.

Das Fluid, das in den Druckbehälter 116 enthalten ist, kann auch dazu verwendet werden, einen Innenraum 118 (vgl. Fig. 3) der mobilen Überwachungseinrichtung 100 permanent mit einem Überdruck zu beaufschlagen. Dies resultiert darin, dass Partikel aus der Umgebung der Überwachungseinrichtung 100 nicht in deren Innen-raum 118 hineingelangen können bzw. hieraus ferngehalten werden. Diesbezüglich wird darauf hingewiesen, dass als "Innenraum" im Sinne der vorliegenden Erfindung diejenigen Bereiche der mobilen Überwachungseinrichtung 100 zu verstehen sind, in denen Kameras 102, 108, Messgeräte 110, 112 oder sonstige Einrichtungen zum Betrieb der mobilen Überwachungseinrichtung 100, z.B. die Steuereinheit 101 und der Motor M, aufgenommen sind. Auch das Gehäuse des Untersatzes 104 zählt zu diesem Innenraum 118. Im Ergebnis ist durch die vorstehend genannte Druckbeaufschlagung des Innenraums 118 mit dem Fluid aus dem Druckbehälter 116 gewährleistet, dass sich auf den einzelnen Komponenten der Überwachungseinrichtung 100, die in dem Innenraum 118 angeordnet bzw. aufgenommen sind, kein Staub o. ä. Verschmutzung ablagert.

Mittels der Erfindung können in einer hüttentechnischen Anlage vielfältige Prozesse gesteuert werden, beispielsweise:
- Das Öffnen oder Schließen von Verschlüssen von Metallbehältern mit flüssigen heißen Schmelzen oder Schlackenmaterial, z.B. Abstichöffnungen an Pfannen, Reduktionsöfen, Elektrolichtbogenöfen, Konvertern, oder auch Stopfen oder Schieber an Zwischenbehältern:
- Bewegungen von Manipulatoren zur Probenentnahme, zur Temperaturmessungen, zu Markierungen von gegossenem Material oder für Ankoppelvorgänge von Schattenrohren und Gießrohren;
- Lanzensteuerungen zur Einblasung von Sauerstoff in Konverterprozessen.

Die mobile Überwachungseinrichtung 100 ist für den Betrieb in temperaturbelasteter Umgebung ausgelegt. Hierzu sind alle Ausrüstungselemente der Überwachungseinrichtung 100, d.h. alle der genannten Kameras und Messgeräte, entsprechend so ausgeführt, dass einer dauerhaft wirkenden Umgebungstemperatur von z.B. 50 °C (oder mehr) standgehalten wird. Zu diesem Zweck können Feuerschutzmaterialien aus aluminisierten Para-Aramid oder hitzebeständigen Polyesterharz eingesetzt werden.

Die mobile Überwachungseinrichtung 100 kann im Sinne der vorliegenden Erfindung bei einer hüttentechnischen Anlage eingesetzt werden auf Gießbühnen, Ofenbühnen, Hüttenfluren, unterhalb von schwebenden Lasten (insbesondere heiße und flüssige Metallschmelzen) oder in sonstigen befahrbaren Sicherheitsbereichen einer solchen Anlage. Jedenfalls kann die mobile Überwachungseinrichtung auf allen befahrbaren Flächen oder Rampen eingesetzt werden, die einen Neigungsgrad von maximal ± 0,5 m auf 1 m ebener Fahrtstrecke aufweisen.

Wie vorstehend bereits erläutert, kann der Motor M als Elektromotor ausgebildet sein, der von der Akkumulator- oder Batterieeinheit 109 mit Energie gespeist wird.

Als "Notfahrhilfe" kann vorgesehen sein, dass entweder dieser Motor M, oder ein separater (nicht gezeigte) Hilfsmotor, mit Druckluft betrieben werden kann. Zu diesem Zweck kann der Motor M mit dem Druckbehälter 116 gekoppelt werden, zwecks eines Antriebs mittels Druckluft. Beispielsweise kann dieses Antriebsprinzip für den Fall gewählt werden, dass die Akkumulator- oder Batterieeinheit 109 , die für den Elektromotor vorgesehen sind, nicht mehr genügend Kapazität aufweisen. Hierdurch ist für die Überwachungseinrichtung 100 eine "Mobilitäts- Reserve" sichergestellt, um in jedem Fall zur Basisstation 15 aus eigener Kraft zurückfahren zu können.

Für die bestimmungsgemäße Überwachung von Bereichen und Komponenten der Anlage 10 mittels der mobilen Überwachungseinrichtung 100 kommen wie erläutert verschiedene Bild - und Tonsignale von Videokameras (nämlich der ersten Kamera 102, der zweiten Kamera 108 und des Mikrofons 110) als auch die Signale von zumindest einer weiteren Messeinheit 112, bei der es sich um eine Wärmebildkamera, ein Infrarot-Pyrometer und/oder ein Gas-Messgerät handeln kann, zum Einsatz.

Die vorstehend erläuterte mobile Überwachungseinrichtung 100 bildet einen Teil einer Steuerungsanlage nach der vorliegenden Erfindung. Hierbei ist kennzeichnend, dass - wie vorstehend erläutert - ein erforderlicher Betriebsprozess der hüttentechnischen Anlage auf Grundlage eines eingestellten Bildbereichs B der ersten Kamera 102, mit dem ein Bereich der hüttentechnischen Anlage 10 beobachtet bzw. überwacht wird, ferngesteuert werden kann.

Schließlich darf darauf hingewiesen werden, dass mit der vorliegenden Erfindung auch mehrere mobile Überwachungseinrichtungen 100 gleichzeitig eingesetzt werden können, die z.B. alle von dem Leitstand 14 aus ferngesteuert werden. In dieser Weise ist es möglich, dass sich das Bedienpersonal von verschiedenen Bereichen der Anlage 10 gleichzeitig ein Bild machen bzw. diese Bereiche überwachen und analysieren kann, unter Verwendung einer mobilen Überwachungseinrichtung 100, die dann gezielt an einen bestimmten Bereich der Anlage 10 herangefahren wird. Der Einsatz von mehreren Überwachungseinrichtungen 100 ist auch deshalb von Vorteil, weil ggf. eine Wartung oder Reparatur für eine dieser Überwachungseinrichtungen 100 durchgeführt werden kann, ohne das deshalb ein Stillstand der gesamten Anlage 10 erforderlich ist.

### Bezugszeichenliste

- 10: Hüttentechnische Anlage
- 11: metallisches Produkt
- 12: ebene Fläche (der hüttentechnischen Anlage 10)
- 13.1, 13.2: Gefährdungsbereich (der hüttentechnischen Anlage 10)
- 14: Leitstand (der hüttentechnischen Anlage 10)
- 15: Basisstation (=Daten-/Empfänger-Ladestation)
- 16: Monitor
- 17: Lautsprecher
- 18: Stranggießanlage
- 19: Pfanne
- 19D: Pfannendrehturm
- 20: Zwischenbehälter
- 21: Kokille
- 22: Strangführung
- 23: Trenneinrichtung
- 24: Rollgang
- 25: Gießbühne/Hüttenflur
- 26: Kranbahn
- 27: Kran
- 28: Brammenauslauf / Hallenboden
- 100: mobile Überwachungseinrichtung
- 101: Steuereinheit
- 102: erste Kamera
- 103: oberer Teil
- 104: Untersatz
- 106: Räder
- 108: zweite Kamera
- 109: Akkumulator- oder Batterieeinheit
- 110: Tonmessgerät / Mikrophon
- 112: weitere Messeinheit
- 114: Schutzhaube
- 115: Fenster (in der Schutzhaube 114)
- 116: Druckbehälter (z.B. für Druckluft)
- 118: Innenraum (der Überwachungseinrichtung 100)
- B: Bildbereich (der ersten Kamera 102)
- M: Motor
- S: Schwenkachse

## Patentansprüche

1. Mobile Überwachungseinrichtung (100) zur Verwendung bei einer hüttentechnischen Anlage (10), die im Bereich der hüttentechnischen Anlage (10) auf einer im Wesentlichen ebenen Fläche (12) frei verfahrbar ist, umfassend einen Untersatz (104) mit Rädern (106) oder Fahrketten, die auf der ebenen Fläche (12) abrollen,
einen Druckluft-Motor (M) zum Antrieb der Räder (106) oder Fahrketten, zumindest eine erste Kamera (102), mit der ein Bereich der hüttentechnischen Anlage (10) beobachtbar und damit überwachbar ist,
zumindest eine zweite Kamera (108), eine Steuereinheit (101), die mit der ersten Kamera (102) und der zweiten Kamera (108) signaltechnisch verbunden ist,
eine Akkumulator- oder Batterieeinheit, mit der zumindest die Kameras (102, 108) und die Steuereinheit (101) mit Energie versorgt werden,
und einen oberen Teil (103) mit einer Schutzhaube (114), wobei die erste Kamera (102) und die zweite Kamera (108) in dem oberen Teil (103) angeordnet und durch die Schutzhaube (114) gegenüber der Umgebung abgeschirmt sind, wobei mit der zweiten Kamera (108) ein Umgebungsbereich der mobilen Überwachungseinrichtung (100) in Richtung von deren Fahrtstrecke auf der ebenen Fläche (12) beobachtbar ist.

2. Mobile Überwachungseinrichtung (100) nach Anspruch 1, **dadurch gekennzeichnet, dass** die Schutzhaube (114) abnehmbar ist, zwecks eines Zugangs zu einem inneren Bereich des oberen Teils (103) und zu einem darin angeordneten Messgerät insbesondere in Form der ersten und zweiten Kamera (102,108).

3. Mobile Überwachungseinrichtung (100) nach Anspruch 1 oder 2, **dadurch gekennzeichnet, dass** ein Druckbehälter (116) vorgesehen ist, der ein unter Druck (P) stehendes Fluid enthält und insbesondere innerhalb des Untersatzes (104) aufgenommen ist, wobei der Druckbehälter (116) mit Mitteln ausgestattet ist, um das Fluid permanent aus dem Druckbehälter (116) zu entnehmen und auf eine äußere Linse des Objektivs zumindest einer Kamera (102, 108) zu richten, so dass auf der Linse anhaftende Partikel weggeblasen werden.

4. Mobile Überwachungseinrichtung (100) nach Anspruch 3, **dadurch gekennzeichnet, dass** der Motor (M) mit Druckluft betreibbar und mit dem Druckbehälter (106) koppelbar ist, so dass auf die Räder (106) oder die Fahrketten eine Antriebskraft ausgeübt wird.

5. Mobile Überwachungseinrichtung (100) nach Anspruch 1 oder 2, **dadurch gekennzeichnet, dass** ein Druckbehälter (116) vorgesehen ist, der ein unter Druck (P) stehendes Fluid enthält und insbesondere innerhalb des Untersatzes (104) aufgenommen ist, wobei der Motor (M) mit Druckluft betreibbar und mit dem Druckbehälter (106) koppelbar ist, so dass auf die Räder (106) oder die Fahrketten eine Antriebskraft ausgeübt wird.

6. Mobile Überwachungseinrichtung (100) nach Anspruch 5, **dadurch gekennzeichnet, dass** der Druckbehälter (116) mit Mitteln ausgestattet ist, um das Fluid permanent aus dem Druckbehälter (106) zu entnehmen und auf eine äußere Linse des Objektivs zumindest einer Kamera (102, 108) zu richten, so dass auf der Linse anhaftende Partikel weggeblasen werden.

7. Mobile Überwachungseinrichtung (100) nach einem der vorhergehenden Ansprüche, **dadurch gekennzeichnet, dass** die mobile Überwachungseinrichtung (100) insbesondere drahtlos von einem Leitstand (14) der hüttentechnischen Anlage (10) aus fernsteuerbar ist, wobei die Bilddaten der ersten Kamera (102) an den Leitstand (14) übertragbar sind.

8. Mobile Überwachungseinrichtung (100) nach einem der vorhergehenden Ansprüche, **dadurch gekennzeichnet, dass** die erste Kamera (102) von dem Leitstand (14) aus fernsteuerbar ist, vorzugsweise, dass die Einstellung des Bildbereichs der ersten Kamera (102) in Bezug auf eine vorbestimmte Richtung und/oder in Bezug auf einen Fokus durch die Fernsteuerung mittels des Leitstands (14) veränderlich ist.

9. Mobile Überwachungseinrichtung (100) nach einem der vorhergehenden Ansprüche, **dadurch gekennzeichnet, dass** zumindest ein Tonmessgerät (110) vorgesehen ist, dessen Signale an den Leitstand (14) der hüttentechnischen Anlage (10) übertragbar sind, vorzugsweise, dass die Signale des Tonmessgeräts (110) im Leitstand (14) der hüttentechnischen Anlage (10) als Akustiksignal bereitstellbar sind, und/oder weiter vorzugsweise, dass das Tonmessgerät (110) in die erste Kamera (102) integriert ist.

10. Mobile Überwachungseinrichtung (100) nach einem der vorhergehenden Ansprüche, **dadurch gekennzeichnet, dass** der obere Teil (103) relativ zu dem Untersatz (104) um 360° verdrehbar angeordnet ist.

11. Mobile Überwachungseinrichtung (100) nach einem der vorhergehenden Ansprüche, **dadurch gekennzeichnet, dass** in oder an dem oberen Teil (103) der mobilen Überwachungseinrichtung (100) zumindest eine weitere Messeinheit (112) vorgesehen ist, die insbesondere drahtlos mit dem Leitstand (14) der hüttentechnischen Anlage (10) verbunden ist und auf einen Bereich der hüttentechnischen Anlage (10) ausrichtbar ist, wobei mit dieser weiteren Messeinheit (112) ein Betriebszustand der hüttentechnischen Anlage (10) überwachbar ist.

12. Mobile Überwachungseinrichtung (100) nach Anspruch 11, **dadurch gekennzeichnet, dass** die weitere -Messeinheit (112) in Form einer Wärmebildkamera ausgebildet ist, mit der eine wärmetechnische Betrachtung von mit heißem flüssigen Material gefüllten Behältern der hüttentechnischen Anlage (10) durchgeführt wird.

13. Mobile Überwachungseinrichtung (100) nach Anspruch 11 oder 12, **dadurch gekennzeichnet, dass** die weitere Messeinheit (112) in Form eines Infrarot-Pyrometers ausgebildet ist, mit dem Oberflächentemperaturmesswerte von Komponenten der hüttentechnischen Anlage (10), von mit der hüttentechnischen Anlage (10) erzeugten Produkten und/oder von flüssigen Schmelzen bzw. Schlacken festgestellt werden.

14. Mobile Überwachungseinrichtung (100) nach einem der vorhergehenden Ansprüche, **dadurch gekennzeichnet, dass** die Schutzhaube (114) die Schutzhaube (114) in Bezug auf Wärmestrahlung und/oder IR-Strahlung durchlässig ist, weiter vorzugsweise, dass die Schutzhaube (114) aus Sicherheitsglas ausgebildet ist.

15. Mobile Überwachungseinrichtung (100) nach einem der Ansprüche 11 bis 14 , **dadurch gekennzeichnet, dass** die weitere Messeinheit (112) in Form eines Gas-Messgerätes ausgebildet ist, mit dem die Konzentration eines bestimmten Gases in der Umgebung der hüttentechnischen Anlage (10) und vorzugsweise in unmittelbarer Nähe der mobilen Überwachungseinrichtung (100) festgestellt wird, vorzugsweise, dass das bestimmte Gas Argon (Ar), Ammoniak (NH3), Kohlendioxid (CO2), Kohlenmonoxid (CO), Chlor (CI2), Chlordioxid (ClO2), Wasserstoff (H2), Chlorwasserstoff (HCl), Cyanwasserstoff (HCN), Schwefelwasserstoff (H2S), Methan (CH4), Stickstoffmonoxid (NO), Stickstoffdioxid (NO2), Sauerstoff (02), Phosphin (PH3) und/oder Schwefeldioxid (SO2) ist.

16. Mobile Überwachungseinrichtung (100) nach einem der vorhergehenden Ansprüche, **dadurch gekennzeichnet, dass** alle daran angebrachten Kameras (102, 108) und Messgeräte (110, 112) temperaturfest ausgebildet sind, vorzugsweise, dass diese temperaturfeste Ausbildung der mobilen Überwachungseinrichtung (100) und vorzugsweise der daran angebrachten Kameras (102, 108) und Messgeräte (110, 112) für eine Dauertemperatur von 40°C oder mehr ausgelegt ist.

17. Mobile Überwachungseinrichtung (100) nach Anspruch 16, **dadurch gekennzeichnet, dass** die Oberflächen der mobilen Überwachungseinrichtung (100) und vorzugsweise der daran angebrachten Kameras (102, 108) und Messgeräte bzw. -einheiten (110, 112) jeweils aus hitzefestem aluminisiertem Para-Aramid ausgebildet sind.

18. Mobile Überwachungseinrichtung (100) nach einem der vorhergehenden Ansprüche, **dadurch gekennzeichnet, dass** die Räder (106) oder die Fahrketten des Untersatzes (104) mit hitzebeständigem Polyesterharz beschichtet sind und/oder zumindest teilweise aus hitzebeständigem Polyesterharz bestehen.

19. Mobile Überwachungseinrichtung (100) nach einem der Ansprüche 3 bis 18, **dadurch gekennzeichnet, dass** ein Innenraum (118) der Überwachungseinrichtung (100), in dem die zumindest erste Kamera (102) und ggf. weitere Kameras (108) und/oder Messeinheiten (110, 112) aufgenommen ist/sind, permanent mit Fluid aus dem Druckbehälter (116) beaufschlagt wird, so dass Partikel aus der Umgebung der Überwachungseinrichtung (100) aus deren Innenraum (118) ferngehalten werden.

20. Steuerungsanlage zum Betrieb einer hüttentechnischen Anlage (10), mit einer mobilen Überwachungseinrichtung (100) nach einem der Ansprüche 1 bis 19, wobei zumindest ein erforderlicher Betriebsprozess der hüttentechnischen Anlage (10) auf Grundlage eines eingestellten Bildbereichs (B) der ersten Kamera (102), mit dem ein Bereich der hüttentechnischen Anlage (10) beobachtet wird, fernsteuerbar ist.

## Claims

1. Mobile monitoring device (100) for use in a metallurgical plant (10), which is freely movable in the region of the metallurgical plant (10) on a substantially planar surface (12), comprising
a chassis (104) with wheels (106) or tracks, which run along the planar surface (12),
a compressed air motor (M) for drive of the wheels (106) or tracks,
at least one first camera (102) by which a region of the metallurgical plant (10) can be observed and thus monitored,
at least one second camera (108),
a control unit (101) in signal connection with the first camera (102) and the second camera (108),
an accumulator unit or a battery unit by which at least the cameras (102, 108) and the control unit (101) are supplied with energy and
an upper part (103) with a protective hood (114), wherein the first camera (102) and the second camera (108) are arranged in the upper part (103) and screened by the protective hood (114) relative to the environment, wherein a region of the environment of the mobile monitoring device (100) can be observed by the second camera (108) in the direction of the travel path of the monitoring device on the planar surface (12).

2. Mobile monitoring device (100) according to claim 1, **characterised in that** the protective hood (114) is removable for the purpose of access to an inner region of the upper part (103) and to a measuring device arranged therein, particularly in the form of the first and second cameras (102, 108).

3. Mobile monitoring device (100) according to claim 1 or 2, **characterised in that** a pressure container (116) which contains a fluid disposed under pressure (P) and which is received, in particular, within the chassis (104) is provided, wherein the pressure container (116) is equipped with means in order to remove the fluid permanently from the pressure container (116) and to direct it onto an outer lens of the objective of at least one camera (102, 108) so that particles adhering to the lens are blown away.

4. Mobile monitoring device (100) according to claim 3, **characterised in that** the motor (M) is operable by compressed air and can be coupled with the pressure container (106) so that a drive force is exerted on the wheels (106) or the tracks.

5. Mobile monitoring device (100) according to claim 1 or 2, **characterised in that** a pressure container (116) which contains fluid disposed under pressure (P) and which is received, in particular, within the chassis (104) is provided, wherein the motor (M) is operable by compressed air and can be coupled with the pressure container (106) so that a drive force can be exerted on the wheels (106) or the tracks.

6. Mobile monitoring device (100) according to claim 5, **characterised in that** the pressure container (116) is equipped with means in order to permanently remove the fluid from the pressure container (106) and direct it onto an outer lens of the objective of at least one camera (102, 108) so that particles adhering to the lens are blown away.

7. Mobile monitoring device (100) according to any one of the preceding claims, **characterised in that** the mobile monitoring device (100) is remotely controllable, in particular in wire-free manner, from a control booth (14) of the metallurgical plant (10), wherein the image data of the first camera (102) are transmissible to the control booth (14).

8. Mobile monitoring device (100) according to any one of the preceding claims, **characterised in that** the first camera (102) is remotely controllable from the control booth (14), preferably **in that** the setting of the image region of the first camera (102) with respect to a predetermined direction and/or with respect to a focus is variable by the remote control by means of the control booth (14).

9. Mobile monitoring device (100) according to any one of the preceding claims, **characterised in that** at least one audio measuring device (110) is provided, the signals of which are transmissible to the control booth (14) of the metallurgical plant (10), preferably in that the signals of the audio measuring device (110) can be prepared in the control booth (14) of the metallurgical plant (10) as an acoustic signal and/or preferably also that the audio measuring device (110) is integrated in the first camera (102).

10. Mobile monitoring device (100) according to any one of the preceding claims, **characterised in that** the upper part (103) is arranged to be rotatable relative to the chassis (104) through 360°.

11. Mobile monitoring device (100) according to any one of the preceding claims, **characterised in that** provided in or at the upper part (103) of the mobile monitoring device (100) is at least one further measuring unit (112) which is connected, particularly in wire-free manner, with the control booth (14) of the metallurgical plant (10) and can be oriented to a region of the metallurgical plant (10), wherein an operational state of the metallurgical plant (10) can be monitored by this further measuring unit (112).

12. Mobile monitoring device (100) according to claim 11, **characterised in that** the further measuring unit (112) has the configuration of a thermal imaging camera by which thermal observation of containers, which are filled with hot liquid material, of the metallurgical plant (10) is carried out.

13. Mobile monitoring device (100) according to claim 11 or 12, **characterised in that** the further measuring unit (112) has the configuration of an infrared pyrometer by which surface temperature measurement values of components of the metallurgical plant (10), of products produced by the metallurgical plant (10) and/or of liquid melts or slags are ascertained.

14. Mobile monitoring device (100) according to any one of the preceding claims, **characterised in that** the protective hood (114) is permeable with respect to thermal radiation and/or infrared radiation, preferably also **in that** the protective hood (114) is constructed from safety glass.

15. Mobile monitoring device (100) according to any one of claims 11 to 14, **characterised in that** the further measuring unit (112) has the configuration of a gas measuring device by which the concentration of a specific gas in the environment of the metallurgical plant (10) and preferably in the immediate vicinity of the mobile monitoring device (100) is ascertained, preferably **in that** the specific gas is argon (Ar), ammonia (NH₃), carbon dioxide (CO₂), carbon monoxide (CO), chlorine (Cl₂), chlorine dioxide (ClO₂), hydrogen (H2), hydrogen chloride (HCl), hydrogen cyanide (HCN), hydrogen sulphide (H₂S), methane (CH₄), nitric oxide (NO), nitric dioxide (NO₂), oxygen (O₂), phosphine (PH₃) and/or sulphur dioxide (SO₂).

16. Mobile monitoring device (100) according to any one of the preceding claims, **characterised in that** all cameras (102, 108) and measuring devices (110, 112) mounted thereon are of temperature-resistant construction, preferably **in that** this temperature-resistant construction of the mobile monitoring device (100) and preferably the cameras (102, 108) and measuring devices (110, 112) mounted thereon are designed for a constant temperature of 40° C or more.

17. Mobile monitoring device (100) according to claim 16, **characterised in that** the surfaces of the mobile monitoring device (100) and preferably the cameras (102, 108) and measuring devices or units (110, 112) mounted thereon are each constructed from heat-resistant aluminised para-aramide.

18. Mobile monitoring device (100) according to any one of the preceding claims, **characterised in that** the wheels (106) or tracks of the chassis (104) are coated with heat-resistant polyester resin and/or consist at least partly of heat-resistant polyester resin.

19. Mobile monitoring device (100) according to any one of claims 3 to 18, **characterised in that** an interior space (118) of the monitoring device (100) in which the at least first camera (102) and optionally further cameras (108) and/or measuring units (110, 112) is or are received is permanently acted on by fluid from the pressure container (116) so that particles from the environment of the monitoring device (100) are kept away from the interior space (118) thereof.

20. Control system for operating a metallurgical plant (10), with a mobile monitoring device (100) according to any one of claims 1 to 19, wherein at least one required operating process of the metallurgical plant (10) is remotely controllable on the basis of a set image region (B) of the first camera (102), by which a region of the metallurgical plant (10) is observed.

## Revendications

1. Mécanisme de surveillance mobile (100) destiné à son utilisation dans le cadre d'une installation sidérurgique (10), qui peut se déplacer librement dans la zone de l'installation sidérurgique (10) sur une surface essentiellement plane (12), qui comprend :
un socle (104) qui est équipé de roues (106) ou de chenilles qui roulent sur la surface plane (12) ;
un moteur du type à air comprimé (M) qui est destiné à entraîner les roues (106) ou les chenilles ;
au moins une première caméra (102) avec laquelle on peut observer et, par voie de conséquence, on peut surveiller une zone de l'installation sidérurgique (10) ;
au moins une deuxième caméra (108) ;
une unité de commande (101) dont la liaison à la première caméra (102) et à la deuxième caméra (108) est assurée par des signaux ;
une unité faisant office d'accumulateur ou de batterie avec laquelle on peut alimenter avec de l'énergie au moins les caméras (102, 108) et l'unité de commande (101) ; et
une partie supérieure (103) qui comprend un capot de protection (114) ;
dans lequel la première caméra (102) et la deuxième caméra (108) sont disposées dans la partie supérieure (103) et sont protégées contre les effets de l'environnement par l'intermédiaire du capot de protection (114) ; dans lequel, avec la deuxième caméra (108), on peut observer une zone environnante du mécanisme de surveillance mobile (100) dans la direction de la trajectoire de ce dernier sur la surface plane (12).

2. Mécanisme de surveillance mobile (100) selon la revendication 1, **caractérisé en ce que** le capot de protection (114) peut être enlevé dans le but d'offrir un accès à une zone interne de la partie supérieure (103) et à un appareil de mesure qui y est disposé, en particulier sous la forme de la première et de la deuxième caméra (102, 108).

3. Mécanisme de surveillance mobile (100) selon la revendication 1 ou 2, **caractérisé en ce que** l'on prévoit un récipient sous pression (116) qui contient un fluide qui est soumis à une pression (P) et qui est logé en particulier au sein du socle (104) ; dans lequel le récipient sous pression (116) est équipé de moyens qui sont destinés à prélever le fluide en permanence à partir du récipient sous pression (116) et à l'orienter dans la direction d'une lentille externe de l'objectif d'au moins une caméra (102, 108), d'une manière telle que l'on élimine par soufflage des particules qui adhèrent à la lentille.

4. Mécanisme de surveillance mobile (100) selon la revendication 3, **caractérisé en ce que** le moteur (M) peut être entraîné avec de l'air sous pression et peut être accouplé au récipient sous pression (106), d'une manière telle que l'on exerce une force d'entraînement sur les roues (106) ou sur les chenilles.

5. Mécanisme de surveillance mobile (100) selon la revendication 1 ou 2, **caractérisé en ce que** l'on prévoit un récipient sous pression (116) qui contient un fluide qui est soumis à une pression (P) et qui est logé en particulier au sein du socle (104) ; dans lequel le moteur (M) peut être entraîné avec de l'air sous pression et peut être accouplé au récipient sous pression (106), d'une manière telle que l'on exerce une force d'entraînement sur les roues (106) ou sur les chenilles.

6. Mécanisme de surveillance mobile (100) selon la revendication 5, **caractérisé en ce que** le récipient sous pression (116) est équipé de moyens qui sont destinés à prélever le fluide en permanence à partir du récipient sous pression (116) et à l'orienter dans la direction d'une lentille externe de l'objectif d'au moins une caméra (102, 108), d'une manière telle que l'on élimine par soufflage des particules qui adhèrent à la lentille.

7. Mécanisme de surveillance mobile (100) selon l'une quelconque des revendications précédentes, **caractérisé en ce que** le mécanisme de surveillance mobile (100) peut être commandé à distance en particulier sans fil à partir d'un poste de commande (14) de l'installation sidérurgique (10) ; dans lequel les données d'images de la première caméra (102) peuvent être transmises au poste de commande (14).

8. Mécanisme de surveillance mobile (100) selon l'une quelconque des revendications précédentes, **caractérisé en ce que** la première caméra (102) peut être commandée à distance à partir du poste de commande (14) ; de préférence, **en ce que** le réglage de la zone de visualisation de la première caméra (102) peut être modifiée en fonction d'une distance prédéfinie et/ou en fonction d'une focalisation par l'intermédiaire de la commande à distance au moyen du poste de commande (14).

9. Mécanisme de surveillance mobile (100) selon l'une quelconque des revendications précédentes, **caractérisé en ce que** l'on prévoit au moins un sonomètre (110) dont les signaux peuvent être transférés au poste de commande (14) de l'installation sidérurgique (10) ; de préférence, **en ce que** les signaux du sonomètre (110) peuvent être rendus disponibles dans le poste de commande (14) de l'installation sidérurgique (10) sous la forme de signaux acoustiques ; et/ou, de manière plus préférée, **en ce que** le sonomètre (110) est intégré dans la première caméra (102).

10. Mécanisme de surveillance mobile (100) selon l'une quelconque des revendications précédentes, **caractérisé en ce que** la partie supérieure (103) est disposée de manière à pouvoir effectuer des rotations sur une plage de 360° par rapport au socle (104).

11. Mécanisme de surveillance mobile (100) selon l'une quelconque des revendications précédentes, **caractérisé en ce que** l'on prévoit dans la partie supérieure (103) du mécanisme de surveillance mobile (100) ou contre la partie en question, au moins une unité de mesure supplémentaire (112) qui est reliée en particulier sans fil au poste de commande (14) de l'installation sidérurgique (10) et qui peut être orientée dans la direction d'une zone de l'installation sidérurgique (10) ; dans lequel, avec cette unité de mesure supplémentaire (112), on peut surveiller un état de fonctionnement de l'installation sidérurgique (10).

12. Mécanisme de surveillance mobile (100) selon la revendication 11, **caractérisé en ce que** l'unité de mesure supplémentaire (112) est réalisée sous la forme d'une caméra thermique avec laquelle on met en œuvre une technique thermique pour l'observation de cuves de l'installation sidérurgique (10) qui sont remplies avec une matière liquide chaude.

13. Mécanisme de surveillance mobile (100) selon la revendication 11 ou 12, **caractérisé en ce que** l'unité de mesure supplémentaire (112) est réalisée sous la forme d'un pyromètre du type à infrarouge avec lequel on détermine des valeurs de températures superficielles de composants de l'installation sidérurgique (10), de produits qui ont été fabriqués avec l'installation sidérurgique (10) et/ou de masses fondues liquides, respectivement de scories.

14. Mécanisme de surveillance mobile (100) selon l'une quelconque des revendications précédentes, **caractérisé en ce que** le capot de protection (114) est perméable en ce qui concerne la chaleur rayonnante et/ou le rayonnement infrarouge ; de manière plus préférée, **en ce que** le capot de protection (114) est réalisé à partir de verre de sécurité.

15. Mécanisme de surveillance mobile (100) selon l'une quelconque des revendications 11 à 14, **caractérisé en ce que** l'unité de mesure supplémentaire (112) est réalisée sous la forme d'un appareil de mesure du gaz, avec lequel on détermine la concentration d'un gaz spécifique dans l'environnement de l'installation sidérurgique (10) et, de préférence, à proximité immédiate du mécanisme de surveillance mobile (100) ; de préférence, **en ce que** le gaz spécifique représente de l'argon (Ar), de l'ammoniac (NH₃), du dioxyde de carbone (CO₂), du monoxyde de carbone (CO), du chlore (Cl₂), du dioxyde de chlore (ClO₂), de l'hydrogène (H₂), du gaz chlorhydrique (HCl), du cyanure d'hydrogène (HCN), du sulfure d'hydrogène (H₂S), du méthane (CH₄), du monoxyde d'azote (NO), du dioxyde d'azote (NO₂), de l'oxygène (O₂), de la phosphine (PH₃) et/ou du dioxyde de soufre (SO₂).

16. Mécanisme de surveillance mobile (100) selon l'une quelconque des revendications précédentes, **caractérisé en ce que** toutes les caméras (102, 108) et tous les appareils de mesure (110, 112) qui y sont appliqués sont réalisés d'une manière à pouvoir résister à la température ; de préférence, **en ce que** cette réalisation du mécanisme de surveillance mobile (100) et de préférence des caméras (102, 108) et des appareils de mesure (110, 112) qui y sont appliqués, qui leur permet de résister à la température, est conçue pour une température sur la durée de 40 °C ou plus.

17. Mécanisme de surveillance mobile (100) selon la revendication 16, **caractérisé en ce que** les surfaces du mécanisme de surveillance mobile (100) et, de préférence, des caméras (102,108) et des appareils de mesure, respectivement des unités de mesure (110,112) qui y sont appliqués sont respectivement réalisées à partir de para-aramide réfractaire aluminisé.

18. Mécanisme de surveillance mobile (100) selon l'une quelconque des revendications précédentes, **caractérisé en ce que** les roues (106) ou les chenilles du socle (104) sont enduites à l'aide d'une résine de polyester qui résiste à la chaleur et/ou sont constituées au moins en partie d'une résine de polyester qui résiste à la chaleur.

19. Mécanisme de surveillance mobile (100) selon l'une quelconque des revendications 3 à 18, **caractérisé en ce qu'**un espace interne (118) du mécanisme de surveillance (100), dans lequel est/sont logés ladite au moins une première caméra (102) et de manière facultative des caméras supplémentaires (108) et/ou des unités de mesure (110, 112), est sollicitée de manière permanente avec un fluide à partir du récipient sous pression (116), d'une manière telle que l'on maintient des particules en provenance de l'environnement du mécanisme de surveillance (100) à l'écart de l'espace interne (118) de ce dernier.

20. Installation de commande destinée à l'exploitation d'une installation sidérurgique (10), qui comprend un mécanisme de surveillance mobile (100) selon l'une quelconque des revendications 1 à 19 ; dans laquelle au moins un processus d'exploitation qui est nécessaire pour l'installation sidérurgique (10) peut être commandé à distance sur base d'une zone de visualisation réglée (B) de la première caméra (102), avec laquelle on observe une zone de l'installation sidérurgique (10).
